# NEUE EUROPÄISCHE PATENTSCHRIFT

(11) **EP 3 738 421 B2**
(45) Veröffentlichungstag und Bekanntmachung des Hinweises auf die Entscheidung über den Einspruch: **15.07.2026**
(45) Hinweis auf die Patenterteilung: 31.05.2023
(21) Anmeldenummer: 20155867.3
(22) Anmeldetag: 06.02.2020
(51) Int. Cl.: A01B 79/00, A01D 41/127, G06Q 10/00, G06Q 50/02, G06Q 10/08

(54) **VERFAHREN ZUR WARTUNG UND/ODER REPARATUR EINER LANDWIRTSCHAFTLICHEN ARBEITSMASCHINE**
METHOD FOR MAINTAINING AND/OR REPAIRING AN AGRICULTURAL WORK MACHINE
PROCÉDÉ D'ENTRETIEN ET/OU DE RÉPARATION D'UNE MACHINE DE TRAVAIL AGRICOLE

(30) Priorität: 14.05.2019 DE 102019112558
(43) Veröffentlichungstag der Anmeldung: 18.11.2020
(73) Patentinhaber: CLAAS Selbstfahrende Erntemaschinen GmbH, 33428 Harsewinkel (DE)
(72) Erfinder: Thöle, Christoph, 49451 Holdorf (DE); Venherm, Patrick, 48336 Sassenberg (DE); Dasenbrock, Thilo, 49377 Vechta (DE)
(74) Vertreter: CLAAS Gruppe

(56) Entgegenhaltungen:
- EP-A1- 1 875 792
- EP-A1- 2 902 984
- EP-A1- 3 115 960
- EP-A1- 3 256 579
- WO-A1-2010/062329
- WO-A1-2018/070924
- CN-A- 103 514 568
- DE-A1- 10 120 173
- US-B1- 8 781 982

## Beschreibung

Die Erfindung betrifft ein Verfahren zur Wartung und/oder Reparatur einer landwirtschaftlichen Arbeitsmaschine gemäß Anspruch 1 sowie ein Computersystem zur Durchführung zumindest einer Analyseroutine des vorschlagsgemäßen Verfahrens gemäß Anspruch 16.

Vor allem während der Ernteperiode kommt der Einsatzbereitschaft von landwirtschaftlichen Arbeitsmaschinen hohe Bedeutung zu. Da Ersatzteile landwirtschaftlicher Arbeitsmaschinen jedoch keine kurzen Lieferzeiten aufweisen, steht die landwirtschaftliche Arbeitsmaschine bei einem Ausfall eines Bauteils möglicherweise lange still, bis das Ersatzteil angeliefert wurde. Gleichzeitig ist es aus wirtschaftlichen Gründen nicht möglich, alle notwendigen Ersatzteile weltweit durchgehend vorrätig zu halten. Es wäre zwar wünschenswert, Ersatzteile grundsätzlich On-Demand genau zum Ausfallzeitpunkt eines Bauteils an einen Servicepunkt in der Nähe der landwirtschaftlichen Arbeitsmaschine zu liefern. Dies ist jedoch nicht ohne weiteres möglich, da weder der Ausfallzeitpunkt des Bauteils noch die Lieferdauer des Ersatzteils genau bestimmbar sind. Während die Lieferdauer des Ersatzteils meist zumindest gut abschätzbar ist, kann der Ausfallzeitpunkt des Bauteils anhand von Erfahrungswerten nur sehr grob prognostiziert werden.

Es kommt vor, dass Bauteile, wie beispielsweise eine Dreschtrommel, vorsorglich vor Beginn der Ernteperiode getauscht werden, obwohl sie möglicherweise noch mehrere Jahre hätten verwendet werden können. Gleichzeitig kommt es auch vor, dass Bauteile früher als erwartet ausfallen und die landwirtschaftliche Arbeitsmaschine somit während der Ernteperiode nicht einsatzbereit ist, oder mit defekten Bauteilen weiter betrieben wird, wodurch auch andere Bauteile beschädigt werden können. Hinzu kommt, dass manche Bauteile möglicherweise schon in einem Zeitraum vor ihrem Ausfall nicht mehr vollständig funktionstüchtig sind und daher andere Bauteile beschädigen. Dokument DE 101 20 173 A1 beschreibt ein Verfahren zur Wartung bzw. Reparatur einer landwirtschaftlichen Arbeitsmaschine.

Bisher wird versucht, diese Probleme durch regelmäßige Wartungen und den vorsorglichen Austausch noch funktionierender Teile zu minimieren. Dies ist sowohl technisch als auch wirtschaftlich nicht optimal.

Der Erfindung liegt das Problem zugrunde, die bekannten Verfahren zur Wartung und/oder Reparatur einer landwirtschaftlichen Arbeitsmaschine derart auszugestalten und weiterzubilden, dass Schäden und/oder Ausfälle der landwirtschaftlichen Arbeitsmaschine reduziert werden.

Das obige Problem wird bei einem Verfahren gemäß Anspruch 1 durch die Merkmale von Anspruch 1 gelöst.

Wesentlich ist die grundsätzliche Überlegung, dass die immer größer werdenden Datenmengen, die während des Betriebs einer landwirtschaftlichen Arbeitsmaschine gesammelt werden können, mit immer genauer werdenden Logistikdaten kombiniert werden können, um eine Ausfalldauerwahrscheinlichkeit und eine Beschädigungswahrscheinlichkeit der landwirtschaftlichen Arbeitsmaschine und/oder eines Bauteils der landwirtschaftlichen Arbeitsmaschine erst zu ermitteln und dann durch das gezielte Initiieren von Lieferroutinen, die eine Lieferung eines mit einem Bauteil der landwirtschaftlichen Arbeitsmaschine korrespondierenden Ersatzteils an einen der landwirtschaftlichen Arbeitsmaschine zugeordneten Servicepunkt umfassen, zu senken.

Im Einzelnen wird nun ein Verfahren zur Wartung und/oder Reparatur einer landwirtschaftlichen Arbeitsmaschine vorgeschlagen. Vorschlagsgemäß wird in einer Analyseroutine auf Basis von Betriebsdaten der landwirtschaftlichen Arbeitsmaschine eine Ausfalldauerwahrscheinlichkeit und eine Beschädigungswahrscheinlichkeit der landwirtschaftlichen Arbeitsmaschine und/oder eines Bauteils der landwirtschaftlichen Arbeitsmaschine ermittelt. Vorschlagsgemäß wird weiterhin auf Basis der Analyseroutine zur Senkung der Ausfalldauerwahrscheinlichkeit und der Beschädigungswahrscheinlichkeit, eine, eine Lieferung eines mit einem Bauteil der landwirtschaftlichen Arbeitsmaschine korrespondierenden Ersatzteils an einen der landwirtschaftlichen Arbeitsmaschine zugeordneten Servicepunkt umfassende, Lieferroutine initiiert.

Das vorschlagsgemäße Verfahren ermöglicht es somit, die wahrscheinlichsten Ausfälle der landwirtschaftlichen Arbeitsmaschine mit hoher Wahrscheinlichkeit zeitnah oder bereits im Voraus zu beheben bzw. zu verhindern, ohne größere Mengen an Ersatzteilen in den Servicepunkten vorrätig halten zu müssen.

Vorteilhafte Ausgestaltungen der Lieferroutine gibt Anspruch 2 an. Es kommt dabei zumindest im Rahmen des Initiierens der Lieferroutine noch nicht auf die vollständige Lieferung des Ersatzteils an, da die Wahrscheinlichkeit eines lang andauernden Ausfalls bereits durch die Bestellung eines Ersatzteils deutlich reduziert werden kann.

Anspruch 3 betrifft die bevorzugt ermittelte Beschädigungswahrscheinlichkeit. Diese betrifft die Wahrscheinlichkeit, dass die landwirtschaftliche Arbeitsmaschine und/oder ein Bauteil der landwirtschaftlichen Arbeitsmaschine beschädigt werden und dass diese Beschädigung auf eine Fehlfunktion oder eine Minderfunktion des mit dem Ersatzteil korrespondierenden Bauteils zurückgeht. Vorzugsweise bezieht sich die Beschädigungswahrscheinlichkeit dabei nicht auf das mit dem Ersatzteil korrespondierende Bauteil, sondern auf ein anderes Bauteil, das durch die Fehl- und/oder Minderfunktion, möglicherweise unbemerkt, beschädigt werden kann. Insbesondere diese Beschädigungswahrscheinlichkeit kann dann gemäß Anspruch 4 durch Einbau des Ersatzteils in die landwirtschaftliche Arbeitsmaschine weiter gesenkt werden.

Die Ausfalldauerwahrscheinlichkeit ist bei der bevorzugten Ausgestaltung gemäß Anspruch 5 eine Wahrscheinlichkeitsverteilung zur Dauer eines möglichen Ausfalls der landwirtschaftlichen Arbeitsmaschine und/oder eines Bauteils der landwirtschaftlichen Arbeitsmaschine. Dieser Ausfall geht dabei auf einen Ausfall des mit dem Ersatzteil korrespondierenden Bauteils zurück. In diesem Fall lässt sich die Ausfalldauerwahrscheinlichkeit durch das Initiieren der Lieferroutine besonders effektiv senken.

Bei der bevorzugten Ausführungsform gemäß Anspruch 7 werden in der Analyseroutine weiterhin aggregierte Betriebsdaten einer Vielzahl anderer landwirtschaftlicher Arbeitsmaschinen und/oder Logistikdaten des mit dem Ersatzteil korrespondierenden Bauteils der landwirtschaftlichen Arbeitsmaschine berücksichtigt. Dies hat den Vorteil, dass bei größeren Datenmengen besser zwischen zufälligen und systematischen Effekten unterschieden werden kann und, dass versteckte Interdependenzen besser identifiziert werden können. Dadurch wird es möglich, die Ausfalldauerwahrscheinlichkeit und die Beschädigungswahrscheinlichkeit genauer zu ermitteln. Durch das Hinzunehmen der Logistikdaten können diese gezielter gesenkt werden.

Die bevorzugten Ausgestaltungen der Ansprüche 8, 10 und 11 beziehen sich auf bevorzugte Ausgestaltungen der Betriebsdaten, der aggregierten Betriebsdaten und der Logistikdaten. Bei der besonders bevorzugten Ausgestaltung gemäß Anspruch 9 werden die Betriebsdaten dabei sensorisch während eines Betriebs der landwirtschaftlichen Arbeitsmaschine gesammelt. Insgesamt sind gerade diese Daten besonders dazu geeignet, verschiedene Einflüsse auf die Betriebsbereitschaft der landwirtschaftlichen Arbeitsmaschine abzubilden, so dass mit dem vorschlagsgemäßen Verfahren diese präzise und effektiv gesteigert werden kann.

Bei noch einer bevorzugten Ausführungsform gemäß Anspruch 12 werden in der Analyseroutine weiterhin Umweltdaten berücksichtigt. Da landwirtschaftliche Arbeitsmaschinen in direktem Kontakt mit Wetter und Boden ihrer jeweiligen Lokalität stehen, wird ihr Betrieb stark von ihrer Umwelt beeinflusst. So verschleißt beispielsweise ein Schneidwerk bei steinigem Boden deutlich schneller als bei lehmigem Boden. Durch Berücksichtigung dieser Effekte ist es möglich, die Ausfalldauerwahrscheinlichkeit und die Beschädigungswahrscheinlichkeit für die jeweilige landwirtschaftliche Arbeitsmaschine oder eines ihrer Bauteile deutlich präziser zu ermitteln.

Werden, wie gemäß Anspruch 13 vorgeschlagen, in der Analyseroutine weiterhin Konstruktionsdaten berücksichtigt, kann das komplexe System "landwirtschaftliche Arbeitsmaschine" besser abgebildet werden, so dass wechselseitige Einflüsse berücksichtigt werden können. Auch dies führt zu einer verbesserten Ermittlung der Ausfalldauerwahrscheinlichkeit und der Beschädigungswahrscheinlichkeit.

Die Ausgestaltungen der Ansprüche 14 und 15 betreffen ein möglichst universell einsetzbares Diagnosegerät, mithilfe dessen die Betriebsdaten gesammelt werden können. Sofern das Diagnosegerät heterogene Betriebsdaten sammelt, die insbesondere von unterschiedlichen Bauteilherstellern und/oder unterschiedlichen Bauteilserien stammen, kann mit einfachen Mitteln eine gute Datenbasis aufgebaut werden.

Nach einer weiteren Lehre gemäß Anspruch 16, der eigenständige Bedeutung zukommt, wird ein Computersystem beansprucht, das zumindest dazu ausgestaltet ist, die Analyseroutine des vorschlagsgemäßen Verfahrens durchzuführen. Es ist dabei üblicherweise so, dass ein derartiges Computersystem benötigt wird, da die Menge an Daten nicht mehr manuell analysierbar ist. Auf alle Ausführungen zu dem vorschlagsgemäßen Verfahren darf verwiesen werden.

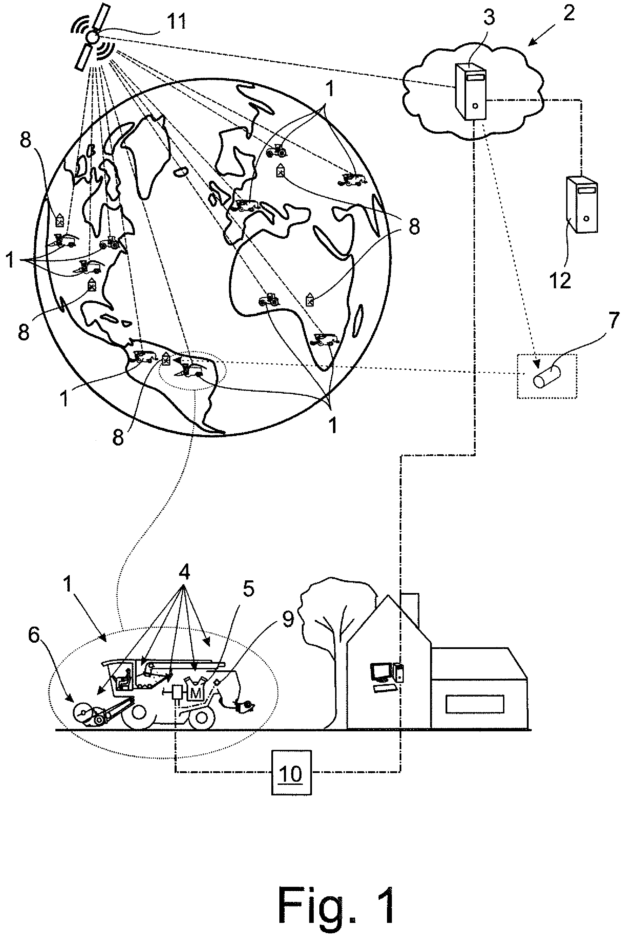

Im Folgenden wird die Erfindung anhand einer lediglich ein Ausführungsbeispiel darstellenden Zeichnung näher erläutert. In der Zeichnung zeigt
- Fig. 1: das Sammeln der Datenbasis des vorschlagsgemäßen Verfahrens inklusive des vorschlagsgemäßen Computersystems.

Das vorschlagsgemäße Verfahren findet Anwendung bei der Wartung und/oder Reparatur einer landwirtschaftlichen Arbeitsmaschine 1. Bei der landwirtschaftlichen Arbeitsmaschine 1 kann es sich um eine Erntemaschine wie einen Mähdrescher oder dergleichen handeln. Das vorschlagsgemäße Verfahren umfasst eine, vorzugsweise von einem Computersystem 2 durchgeführte, Analyseroutine. Das Computersystem 2 umfasst vorzugsweise einen oder mehrere Server 3.

Der Begriff "Wartung" bezieht sich generell auf das Erhalten der Betriebsbereitschaft der landwirtschaftlichen Arbeitsmaschine 1, während der Begriff "Reparatur" sich auf das Beseitigen eines drohenden oder vorhandenen Ausfalls der landwirtschaftlichen Arbeitsmaschine 1 oder eines Bauteils 4 der landwirtschaftlichen Arbeitsmaschine 1 bezieht.

In der Analyseroutine wird auf Basis von Betriebsdaten der landwirtschaftlichen Arbeitsmaschine 1 eine Ausfalldauerwahrscheinlichkeit und eine Beschädigungswahrscheinlichkeit der landwirtschaftlichen Arbeitsmaschine 1 und/oder eines Bauteils 4 der landwirtschaftlichen Arbeitsmaschine 1 ermittelt. Bei dem Bauteil 4 der landwirtschaftlichen Arbeitsmaschine 1 kann es sich beispielsweise um einen Antriebsmotor 5, ein Bauteil 4 des Antriebsmotors 5 und/oder ein Erntewerkzeug, insbesondere ein Schneidwerkzeug 6, der landwirtschaftlichen Arbeitsmaschine 1 handeln.

Vorschlagsgemäß wird auf Basis der Analyseroutine zur Senkung der Ausfalldauerwahrscheinlichkeit und der Beschädigungswahrscheinlichkeit eine, eine Lieferung eines mit einem Bauteil 4 der landwirtschaftlichen Arbeitsmaschine 1 korrespondierenden Ersatzteils 7 an einen der landwirtschaftlichen Arbeitsmaschine 1 zugeordneten Servicepunkt 8 umfassende, Lieferroutine initiiert. Es sei an dieser Stelle erwähnt, dass eine landwirtschaftliche Arbeitsmaschine 1 mehreren Servicepunkten 8 zugeordnet sein kann, dass mehrere landwirtschaftliche Arbeitsmaschinen 1 einem Servicepunkt 8 zugeordnet sein können und dass diese Zuordnungen sich mit der Zeit ändern können. Der Servicepunkt 8 kann dabei eine Werkstatt, eine Filiale eines Herstellers oder Ähnliches sein.

Das vorschlagsgemäße Verfahren befasst sich ganz allgemein damit, die Betriebsbereitschaft einer landwirtschaftlichen Arbeitsmaschine 1 durch das Initiieren der Lieferroutine zu erhöhen. Im Folgenden soll zuerst erläutert werden, wie mittels dieser einfachen Maßnahme die Ausfalldauerwahrscheinlichkeit und die Beschädigungswahrscheinlichkeit gesenkt werden kann, bevor im Anschluss die Datenbasis thematisiert wird.

Die Initiierung der Lieferroutine umfasst vorzugsweise ein Bestellen des Ersatzteils 7 zur Lieferung an den Servicepunkt 8. Schon dadurch wird die Ausfalldauerwahrscheinlichkeit und die Beschädigungswahrscheinlichkeit gesenkt, da das benötigte Ersatzteil 7 zu einem Zeitpunkt, an dem es benötigt wird, bereits zu dem Servicepunkt 8 unterwegs ist, oder dort bereits eingetroffen ist. Es sei an dieser Stelle darauf hingewiesen, dass das vorschlagsgemäße Verfahren selbstverständlich vor Eintritt des Ausfalls und/oder der Beschädigung durchgeführt wird, da die Ausfalldauerwahrscheinlichkeit und die Beschädigungswahrscheinlichkeit anschließend nicht mehr beeinflussbar sind.

In einer bevorzugten Weiterbildung des vorschlagsgemäßen Verfahrens umfasst dieses auch, dass die Lieferroutine durchgeführt wird. Dies liefert die Voraussetzung zum tatsächlichen Einbau des Ersatzteils 7 in die landwirtschaftliche Arbeitsmaschine 1. Dabei ist es besonders vorzugsweise so, dass der Servicepunkt 8 in räumlicher Nähe zu der landwirtschaftlichen Arbeitsmaschine 1 liegt. Es ist jedoch auch denkbar, dass der Servicepunkt 8 in räumlicher Nähe zu einer zukünftigen Position der landwirtschaftlichen Arbeitsmaschine 1 liegt.

Der übliche Betriebszyklus einer landwirtschaftlichen Arbeitsmaschine 1 wird durch den Kauf der landwirtschaftlichen Arbeitsmaschine 1 ausgelöst. Sie wird anschließend betrieben, wobei die Betriebsdaten anfallen, und wird planmäßig gewartet. Zu jedem Zeitpunkt dieses Zyklusses kann ein Ausfall oder eine Beschädigung der landwirtschaftlichen Arbeitsmaschine 1 und/oder eines Bauteils 4 der landwirtschaftlichen Arbeitsmaschine 1 auftreten. Das vorschlagsgemäße Verfahren dient dazu, an dieser Stelle mit einem gezielten Eingriff die Ausfalldauerwahrscheinlichkeit und die Beschädigungswahrscheinlichkeit zu senken. Konkret bedeutet dies, dass längere Ausfälle, insbesondere während der Ernteperiode, vermieden oder verkürzt werden sollen, dass Beschädigungen möglichst verhindert werden sollen und dies unter Berücksichtigung der jeweiligen Eintrittswahrscheinlichkeiten der möglichen Ausfälle und/oder Beschädigungen geschieht.

Hier und vorzugsweise ist die Beschädigungswahrscheinlichkeit eine Wahrscheinlichkeitsverteilung zur möglichen Beschädigung der landwirtschaftlichen Arbeitsmaschine 1 und/oder eines Bauteils 4 der landwirtschaftlichen Arbeitsmaschine 1 aufgrund einer Fehlfunktion und/oder Minderfunktion des mit dem Ersatzteil 7 korrespondierenden Bauteils 4 der landwirtschaftlichen Arbeitsmaschine 1. Dabei handelt es sich vorzugsweise um eine mögliche Beschädigung eines Bauteils 4 der landwirtschaftlichen Arbeitsmaschine 1, das nicht mit dem Ersatzteil 7 korrespondiert. So könnte beispielsweise eine Fehlfunktion einer Dieselzuführung der landwirtschaftlichen Arbeitsmaschine 1 eine Beschädigung des Antriebsmotors 5 hervorrufen. Während die Dieselzuführung bei Vorliegen des korrekten Ersatzteils 7 in diesem Beispiel schnell repariert wäre, könnte, sofern das Ersatzteil 7 eine lange Lieferzeit hat und der Betreiber der landwirtschaftlichen Arbeitsmaschine 1 die landwirtschaftliche Arbeitsmaschine 1 weiter betreibt, da er seine Ernte einfahren muss, am Ende der Ernteperiode ein Motorschaden stehen.

Durch das rechtzeitige Initiieren der Lieferroutine für das Ersatzteil 7, in diesem Beispiel die Dieselzuführung, kann so mit einfachsten Mitteln ein Motorschaden verhindert werden. Entsprechend ist es vorzugsweise so, dass das Ersatzteil 7 zur Wartung der landwirtschaftlichen Arbeitsmaschine 1 eingebaut wird, um die Beschädigungswahrscheinlichkeit zu senken. In diesem Beispiel wird also die Lieferroutine der Dieselzuführung durchgeführt und die Dieselzuführung wird rechtzeitig getauscht, so dass am Ende der Ernteperiode kein potentieller Motorschaden steht.

Es darf an dieser Stelle darauf hingewiesen werden, dass sich der Begriff "Wahrscheinlichkeitsverteilung" auf die Verteilung der Wahrscheinlichkeit über der Zeit bezieht und somit angibt, wie wahrscheinlich der Eintritt des jeweiligen Ereignisses zu einem bestimmten Zeitpunkt ist. Es ist dabei für das vorschlagsgemäße Verfahren nicht notwendig, dass diese Wahrscheinlichkeitsverteilung eindeutig oder vollständig berechenbar ist, es kann schon ausreichen, wenn Schätzwerte zu einigen definierten Zeitpunkten ermittelt werden.

Hier und vorzugsweise ist auch die Ausfalldauerwahrscheinlichkeit eine Wahrscheinlichkeitsverteilung, jedoch zur Dauer eines möglichen Ausfalls der landwirtschaftlichen Arbeitsmaschine 1 und/oder eines Bauteils 4 der landwirtschaftlichen Arbeitsmaschine 1 aufgrund eines Ausfalls des mit dem Ersatzteil 7 korrespondierenden Bauteils 4. Die Ausfalldauerwahrscheinlichkeit gibt dabei zumindest die Wahrscheinlichkeit eines Ausfalls einer bestimmten Dauer zu mindestens einem Zeitpunkt an. Bei diesem Bauteil 4 könnte es sich beispielsweise um das Schneidwerkzeug 6 handeln ohne das ein weiterer Betrieb der landwirtschaftlichen Arbeitsmaschine 1 nicht mehr sinnvoll möglich wäre. Entsprechend fiele die landwirtschaftliche Arbeitsmaschine 1 als solche dann aus.

Hier und vorzugsweise wird das Ersatzteil 7 zur Reparatur der landwirtschaftlichen Arbeitsmaschine 1 in diese eingebaut, um einen Ausfall der landwirtschaftlichen Arbeitsmaschine 1 und/oder des Bauteils 4 der landwirtschaftlichen Arbeitsmaschine 1 zu beenden und/oder die Dauer des Ausfalls zu verkürzen und/oder den Ausfall zu verhindern. Das besagte Schneidwerkzeug 6 könnte nach Abschluss der Lieferroutine somit in die landwirtschaftliche Arbeitsmaschine 1 eingebaut werden, bevor es tatsächlich zu einem Ausfall kommt oder es könnte zumindest vor dem Ausfall bereits bestellt sein und daher früher in die landwirtschaftliche Arbeitsmaschine 1 eingebaut werden, als wenn es erst zum Ausfallzeitpunkt bestellt würde.

Im Folgenden sollen anhand von Fig. 1 die vorzugsweise in der Analyseroutine berücksichtigbaren Daten und ihre Herkunft anhand des Ausführungsbeispiels näher beleuchtet werden. Hier und vorzugsweise werden in der Analyseroutine die Ausfalldauerwahrscheinlichkeit und die Beschädigungswahrscheinlichkeit der landwirtschaftlichen Arbeitsmaschine 1 und/oder des Bauteils 4 der landwirtschaftlichen Arbeitsmaschine 1 weiterhin auf Basis von aggregierten Betriebsdaten einer Vielzahl anderer landwirtschaftlicher Arbeitsmaschinen 1 ermittelt.

Der Begriff "Vielzahl" ist so zu verstehen, dass es sich zwar auch um nur mehr als eine andere landwirtschaftliche Arbeitsmaschine 1 handeln kann, die Vielzahl landwirtschaftlicher Arbeitsmaschinen 1 jedoch vorzugsweise mindestens 100 weiter vorzugsweise mindestens 500 und noch weiter vorzugsweise mindestens 1.000 andere landwirtschaftliche Arbeitsmaschinen 1 umfasst. Insbesondere kann die Vielzahl landwirtschaftlicher Arbeitsmaschinen 1 dabei global verteilt sein. Das heißt, dass die Vielzahl landwirtschaftlicher Arbeitsmaschinen 1 vorzugsweise mindestens landwirtschaftliche Arbeitsmaschinen 1 aus zwei Ländern, weiter vorzugsweise mindestens aus fünf Ländern und noch weiter vorzugsweise von mindestens zwei Kontinenten umfasst.

Wie in Fig. 1 dargestellt existiert vorzugsweise eine Vielzahl landwirtschaftlicher Arbeitsmaschinen 1, die global verteilt sind. Wie später noch erläutert wird, werden die Betriebsdaten dieser Vielzahl landwirtschaftlicher Arbeitsmaschinen 1 vorzugsweise an den Server 3 übertragen. Die Daten der Vielzahl landwirtschaftlicher Arbeitsmaschinen 1 können dann mit Methoden der Datenverarbeitung, insbesondere der Big Data Analyse, zu aggregierten Betriebsdaten verarbeitet werden. Dafür können beispielsweise Statistische- und/oder Mustererkennungsmethoden verwendet werden. Aus diesen aggregierten Betriebsdaten werden dann vorzugsweise, insbesondere automatisiert mittels des Computersystems 2, Rückschlüsse auf Abläufe während des Betriebs der landwirtschaftlichen Arbeitsmaschine 1 gezogen. Hierfür können die Betriebsdaten der landwirtschaftlichen Arbeitsmaschine 1 mit in den Vorgang des Aggregierens der Betriebsdaten der Vielzahl der landwirtschaftlichen Arbeitsmaschinen 1 einflie-βen, oder anschließend damit verglichen werden. Die hier beschriebene Art der Datenaggregation lässt sich äquivalent auch auf die weiteren noch zu beschreibenden oder bereits beschriebenen Datentypen anwenden.

Zusätzlich zu den Betriebsdaten und gegebenenfalls den aggregierten Betriebsdaten wird vorzugsweise in der Analyseroutine die Ausfalldauerwahrscheinlichkeit und/oder die Beschädigungswahrscheinlichkeit der landwirtschaftlichen Arbeitsmaschine 1 und/oder des Bauteils 4 der landwirtschaftlichen Arbeitsmaschine 1 weiterhin auf Basis von Logistikdaten des mit dem Ersatzteil 7 korrespondierenden Bauteils 4 der landwirtschaftlichen Arbeitsmaschine 1 ermittelt. Konkret können die Logistikdaten insbesondere dazu genutzt werden, die mögliche Dauer eines möglichen Ausfalls zu prognostizieren oder zu ermitteln, wie wahrscheinlich eine Beschädigung aufgrund fehlender Möglichkeiten des Austausches des entsprechenden Bauteils 4 ist.

Vorzugsweise werden die Ausfalldauerwahrscheinlichkeit und/oder die Beschädigungswahrscheinlichkeit für mehr als ein Bauteil 4 der landwirtschaftlichen Arbeitsmaschine 1 ermittelt. Die Lieferroutine wird weiter vorzugsweise initiiert, wenn eine Ausfalldauerwahrscheinlichkeit und/oder eine Beschädigungswahrscheinlichkeit zumindest eines Bauteils 4 oder der landwirtschaftlichen Arbeitsmaschine 1 als solcher einen Schwellwert überschreitet oder wenn ein daraus abgeleiteter Wert, beispielsweise ein Kostenwert, einen Schwellwert überschreitet.

Die Betriebsdaten und/oder die aggregierten Betriebsdaten umfassen hier und vorzugsweise Auslastungsdaten, insbesondere eine Anzahl an Betriebsstunden und/oder Motorlastdaten, insbesondere des Antriebsmotors 5. Die Auslastungsdaten können weiterhin eine Drehzahl zu bestimmten Zeitpunkten, eine Maximaldrehzahl, eine Betriebsstundenzahl, das Überschreiten einer maximalen Nutzlast und dergleichen mehr umfassen.

Die Betriebsdaten und/oder die aggregierten Betriebsdaten können zusätzlich oder alternativ Konfigurations- und Parametereinstellungsdaten und/oder Konfigurations- und Parametereinstellungsänderungsdaten und/oder Kalibrierungsdaten umfassen. Besonders bevorzugt umfassen die Betriebsdaten zumindest Fehlerdaten, insbesondere eine Fehlerart und/oder eine Fehlerhäufigkeit. Ganz allgemein können sich die Betriebsdaten und/oder die aggregierten Betriebsdaten jeweils auf die entsprechende landwirtschaftliche Arbeitsmaschine 1 und/oder zumindest ein Bauteil 4 der landwirtschaftlichen Arbeitsmaschine 1 beziehen.

Hier und vorzugsweise werden die Betriebsdaten während eines Betriebs der landwirtschaftlichen Arbeitsmaschine 1 mittels mindestens eines Sensors 9 der landwirtschaftlichen Arbeitsmaschine 1 gesammelt. Vorzugsweise gilt dies gleichfalls für die Vielzahl der landwirtschaftlichen Arbeitsmaschinen 1.

Da landwirtschaftliche Arbeitsmaschinen 1 komplexe Systeme sind, kann es vorkommen, dass Fehler in einem Bauteil 4 sich auch auf andere Bauteile 4 auswirken. Derartige Abhängigkeiten können offensichtlich sein, sind dies häufig jedoch nicht. Erst durch die Auswertung der Betriebsdaten der Vielzahl landwirtschaftlicher Arbeitsmaschinen 1 können derartige gehäuft auftretende Fehlerketten sichtbar gemacht werden. Entsprechend ist es hier und vorzugsweise so, dass die aggregierten Betriebsdaten Fehlerfortpflanzungsdaten und/oder Interdependenzdaten zu dem mit dem Ersatzteil 7 korrespondierenden Bauteil 4 und zumindest einem weiteren Bauteil 4 der landwirtschaftlichen Arbeitsmaschine 1 umfassen und vorzugsweise, dass die Ausfalldauerwahrscheinlichkeit und/oder die Beschädigungswahrscheinlichkeit, zumindest auch, dem weiteren Bauteil 4 zugeordnet ist. Die aggregierten Betriebsdaten ermöglichen es somit, noch deutlich präziser in die Betriebsabläufe der landwirtschaftlichen Arbeitsmaschine 1 zur Wartung und/oder Reparatur dieser einzugreifen.

Die angesprochenen Logistikdaten umfassen hier und vorzugsweise eine zu erwartende Lieferdauer des Ersatzteils 7, insbesondere eine Wahrscheinlichkeitsverteilung einer zu erwartenden Lieferdauerzeitspanne, und/oder eine Verfügbarkeit des Ersatzteils 7 und/oder einen zu erwartenden Verbrauch des Ersatzteils 7 durch andere landwirtschaftliche Arbeitsmaschinen 1. So kann es beispielsweise passieren, dass ein Ersatzteil 7 zwar vorrätig ist, jedoch andere landwirtschaftliche Arbeitsmaschinen 1 dieses voraussichtlich auch benötigen werden. Da die Lieferdauer eines Ersatzteils 7 von vielen Faktoren, insbesondere auch von Transportkosten, die beispielsweise in einem Schiffscontainer und per Luftfracht deutlich unterschiedlich sind, abhängen, umfassen die Logistikdaten vorzugsweise zusätzlich oder alternativ Kostendaten.

Der Betrieb einer landwirtschaftlichen Arbeitsmaschine 1 kann je nach Umwelt sehr unterschiedlich ausfallen. Der Luftdruck auf Meeresniveau kann die Funktion des Antriebsmotors 5 anders beeinflussen als der Luftdruck auf 3.000 Höhenmetern, an einem sonnigen Tag kann eine landwirtschaftliche Arbeitsmaschine 1 auf einem zu bewirtschaftenden Feld hohen Temperaturen ausgesetzt sein. Aufgrund der Notwendigkeit die Ernte einzubringen, kann die landwirtschaftliche Arbeitsmaschine 1 auch bei widrigsten Wetterbedingungen eingesetzt werden. Zudem erfordert der Einsatz auf einem Feld an einem Berghang deutlich andere Eigenschaften als auf einem Feld auf einer Flutebene. Dementsprechend ist es vorzugsweise so, dass in der Analyseroutine die Ausfalldauerwahrscheinlichkeit und/oder die Beschädigungswahrscheinlichkeit der landwirtschaftlichen Arbeitsmaschine 1 und/oder des Bauteils 4 der landwirtschaftlichen Arbeitsmaschine 1 weiterhin auf Basis von der landwirtschaftlichen Arbeitsmaschine 1 zugeordneten Umweltdaten und/oder der Vielzahl landwirtschaftlicher Arbeitsmaschinen 1 zugeordneten aggregierten Umweltdaten ermittelt wird.

Die Umweltdaten und/oder die aggregierten Umweltdaten können dabei Wetterdaten und/oder Geodaten und/oder Klimadaten und/oder Erntedaten, insbesondere Ernteperiodendaten, umfassen. Alternativ oder zusätzlich können die Umweltdaten Mikro- und/oder Makrodaten umfassen. Die Mikrodaten betreffen dabei das direkte Umfeld der landwirtschaftlichen Arbeitsmaschine 1, insbesondere ein zu bearbeitendes Feld, und die Makrodaten betreffen dabei, zumindest potentiell, eine Mehrzahl an landwirtschaftlichen Arbeitsmaschinen 1. Die Mikrodaten könnten zum Beispiel die Information umfassen, dass ein zu einem bestimmten Zeitpunkt bearbeitetes Feld sehr steinig war, während die Makrodaten zum Beispiel die Information umfassen könnten, dass in der Nähe des Äquators befindliche landwirtschaftliche Arbeitsmaschinen 1 häufiger hohen Temperaturen ausgesetzt sind. Dafür ist es nicht zwingend notwendig, dass sich tatsächlich eine Mehrzahl an landwirtschaftlichen Arbeitsmaschinen 1 in der Nähe des Äquators befindet, es können sich jedoch zumindest potentiell deutlich mehr landwirtschaftliche Arbeitsmaschinen 1 in der Nähe des Äquators befinden, als auf einem einzelnen Feld zu erwarten sind.

Die Umweltdaten umfassen vorzugsweise mindestens einen nicht von einer landwirtschaftlichen Arbeitsmaschine 1 gesammelten Datensatz. Weiter vorzugsweise ist es so, dass zumindest die Makrodaten, vorzugsweise die gesamten Umweltdaten, aus bezüglich der landwirtschaftlichen Arbeitsmaschine 1 externen Datenquellen stammen. Weiter vorzugsweise sind die externen Datenquellen den landwirtschaftlichen Arbeitsmaschinen 1 auch nicht direkt zugeordnet. Dies ist zum Beispiel bei Wetterdaten eines Wetterdienstes der Fall.

Hier und vorzugsweise wird die Ausfalldauerwahrscheinlichkeit und/oder die Beschädigungswahrscheinlichkeit der landwirtschaftlichen Arbeitsmaschine 1 und/oder des Bauteils 4 der landwirtschaftlichen Arbeitsmaschine 1 in der Analyseroutine weiterhin auf Basis von der landwirtschaftlichen Arbeitsmaschine 1 zugeordneten Konstruktionsdaten ermittelt. Die Konstruktionsdaten umfassen vorzugsweise Identifikationsdaten, insbesondere Baureihendaten und/oder Herstellerdaten, und/oder technische Eigenschaften der landwirtschaftlichen Arbeitsmaschine 1 und/oder eines Bauteils 4 der landwirtschaftlichen Arbeitsmaschine 1, insbesondere des mit dem Ersatzteil 7 korrespondierenden Bauteils 4.

Wie in Fig. 1 dargestellt, können die oben angesprochenen Daten aus ganz unterschiedlichen Quellen stammen. Hier und vorzugsweise stammen die Betriebsdaten und/oder die aggregierten Betriebsdaten von einem noch zu erläuternden Diagnosegerät 10, während die Umweltdaten vorzugsweise aus einer anderen Datenquelle, hier dem Satelliten 11, stammen. Die Konstruktions- und Logistikdaten stammen hier und vorzugsweise wieder aus einer anderen Quelle, hier von einem weiteren Server 12.

Wie gerade erwähnt, werden die Betriebsdaten der landwirtschaftlichen Arbeitsmaschine 1 und/oder der Vielzahl der landwirtschaftlichen Arbeitsmaschinen 1 vorzugsweise von einem Diagnosegerät 10 gesammelt. Dieses Diagnosegerät 10 wird vorzugsweise im Rahmen einer Wartung, beispielsweise einer jährlichen Wartung, mit einer landwirtschaftlichen Arbeitsmaschine 1 verbunden. Vorzugsweise ist das Diagnosegerät 10 dabei keiner speziellen landwirtschaftlichen Arbeitsmaschine 1 zugeordnet, sondern kann zumindest an mehr als eine landwirtschaftliche Arbeitsmaschine 1 angeschlossen werden. Entsprechend sammelt das Diagnosegerät 10 weiter vorzugsweise heterogene Betriebsdaten, insbesondere von unterschiedlichen Bauteilherstellern und/oder unterschiedlichen Bauteilserien.

Hier und vorzugsweise ist das Diagnosegerät 10 an die landwirtschaftliche Arbeitsmaschine 1 anschließbar, um eine Diagnose der landwirtschaftlichen Arbeitsmaschine 1 zu erstellen. Die Betriebsdaten können gesammelt werden, während das Diagnosegerät 10 an die landwirtschaftliche Arbeitsmaschine 1 angeschlossen ist. Genauso vorteilhaft kann jedoch vorgesehen sein, dass die Betriebsdaten von dem Diagnosegerät 10 von der landwirtschaftlichen Arbeitsmaschine 1 empfangen werden, wenn das Diagnosegerät 10 an die landwirtschaftliche Arbeitsmaschine 1 angeschlossen ist. Es kann auch vorgesehen sein, dass das Diagnosegerät 10 Testdaten sammelt, während es an die landwirtschaftliche Arbeitsmaschine 1 angeschlossen ist. Hierfür kann das Diagnosegerät 10 weiter vorzugsweise die landwirtschaftliche Arbeitsmaschine 1 zum Durchführen von Testroutinen ansteuern.

In der gezeigten und insoweit bevorzugten Ausführungsform werden die von der landwirtschaftlichen Arbeitsmaschine 1 gesammelten Betriebsdaten an das Diagnosegerät 10 übertragen, das vorzugsweise anschließend an einen Computer 13 angeschlossen wird, der die Betriebsdaten dann an den Server 3 überträgt.

Zum Schutz vor unbefugten Änderungen kann vorgesehen sein, dass die Betriebsdaten mittels der Blockchain-Technologie geschützt werden. Hierfür kann die landwirtschaftliche Arbeitsmaschine 1 Daten als Blockchain abspeichern, das Diagnosegerät 10 kann diese wiederum mit eigenen Daten erweitern und der Server 3 kann dann prüfen, ob die Daten kohärent sind.

Wie bereits angesprochen kann das Verfahren teilweise oder vollständig, je nach Ausgestaltung, von dem Computersystem 2 durchgeführt werden. Das Computersystem 2, das Gegenstand einer eigenständigen Lehre ist, ist vorzugsweise dazu eingerichtet, zumindest die vorschlagsgemäße Analyseroutine durchzuführen. Das Computersystem 2 kann dazu eingerichtet sein, die Lieferroutine zu initiieren. Es kann, sowohl bezüglich des vorschlagsgemäßen Verfahrens als auch bezüglich des vorschlagsgemäßen Computersystems 2, vorgesehen sein, dass das Computersystem 2 die Analyseroutine automatisiert durchführt und anschließend automatisiert, insbesondere ohne zwischenzeitlichen Nutzereingriff, die Lieferroutine initiiert. Genauso vorteilhaft kann vorgesehen sein, dass das Computersystem 2 automatisch ein initiieren der Lieferroutine vorschlägt und dies vom Nutzer genehmigt werden kann.

Hier und vorzugsweise ist es das gleiche Computersystem 2, das aus den Betriebsdaten der Vielzahl der landwirtschaftlichen Arbeitsmaschinen 1 die aggregierten Betriebsdaten ermittelt. Das Computersystem 2 kann eine Webapplikation aufweisen, mittels derer ein Nutzer die Lieferroutine, wie oben dargestellt initiieren kann. Auf alle Ausführungen zu dem vorschlagsgemäßen Verfahren darf bezüglich des Computersystems 2 verwiesen werden. Aufgrund der Komplexität der Datenmengen ist das Computersystem 2 vorzugsweise auch bei dem vorschlagsgemäßen Verfahren obligatorisch, das heißt, dass vorzugsweise zumindest die Analyseroutine und/oder das Aggregieren der Betriebsdaten des vorschlagsgemäßen Verfahrens manuell nicht möglich ist.

Das Computersystem 2 ist vorzugsweise keiner landwirtschaftlichen Arbeitsmaschine 1 zugeordnet und insbesondere Cloud-basiert.

### Bezugszeichenliste

- 1: landwirtschaftliche Arbeitsmaschine
- 2: Computersystem
- 3: Server
- 4: Bauteil
- 5: Antriebsmotor
- 6: Schneidwerkzeug
- 7: Ersatzteil
- 8: Servicepunkt
- 9: Sensor
- 10: Diagnosegerät
- 11: Satellit
- 12: weiterer Server
- 13: Computer

## Patentansprüche

1. Verfahren zur Wartung und/oder Reparatur einer landwirtschaftlichen Arbeitsmaschine (1), **dadurch gekennzeichnet, dass** in einer Analyseroutine auf Basis von Betriebsdaten der landwirtschaftlichen Arbeitsmaschine (1) eine Ausfalldauerwahrscheinlichkeit und eine Beschädigungswahrscheinlichkeit der landwirtschaftlichen Arbeitsmaschine (1) und/oder eines Bauteils (4) der landwirtschaftlichen Arbeitsmaschine (1) ermittelt wird und wobei, auf Basis der Analyseroutine, zur Senkung der Ausfalldauerwahrscheinlichkeit und der Beschädigungswahrscheinlichkeit, eine, eine Lieferung eines mit einem Bauteil (4) der landwirtschaftlichen Arbeitsmaschine (1) korrespondierenden Ersatzteils (7) an einen der landwirtschaftlichen Arbeitsmaschine (1) zugeordneten Servicepunkt (8) umfassende, Lieferroutine initiiert wird.

2. Verfahren nach Anspruch 1, **dadurch gekennzeichnet, dass** die Initiierung der Lieferroutine ein Bestellen des Ersatzteils (7) zur Lieferung an den Servicepunkt (8) umfasst, vorzugsweise, dass die Lieferroutine durchgeführt wird, weiter vorzugsweise, dass der Servicepunkt (8) in räumlicher Nähe zu der landwirtschaftlichen Arbeitsmaschine (1) liegt.

3. Verfahren nach Anspruch 1 oder 2, **dadurch gekennzeichnet, dass** die Beschädigungswahrscheinlichkeit eine Wahrscheinlichkeitsverteilung zur möglichen Beschädigung der landwirtschaftlichen Arbeitsmaschine (1) und/oder eines Bauteils (4) der landwirtschaftlichen Arbeitsmaschine (1) aufgrund einer Fehlfunktion und/oder Minderfunktion des mit dem Ersatzteil (7) korrespondierenden Bauteils (4) der landwirtschaftlichen Arbeitsmaschine (1) ist.

4. Verfahren nach einem der vorhergehenden Ansprüche, **dadurch gekennzeichnet, dass** das Ersatzteil (7) zur Wartung der landwirtschaftlichen Arbeitsmaschine (1) in die landwirtschaftliche Arbeitsmaschine (1) eingebaut wird, um die Beschädigungswahrscheinlichkeit zu senken.

5. Verfahren nach einem der vorhergehenden Ansprüche, **dadurch gekennzeichnet, dass** die Ausfalldauerwahrscheinlichkeit eine Wahrscheinlichkeitsverteilung zur Dauer eines möglichen Ausfalls der landwirtschaftlichen Arbeitsmaschine (1) und/oder eines Bauteils (4) der landwirtschaftlichen Arbeitsmaschine (1) auf Grund eines Ausfalls des mit dem Ersatzteil (7) korrespondieren Bauteils (4) ist.

6. Verfahren nach einem der vorhergehenden Ansprüche, **dadurch gekennzeichnet, dass** das Ersatzteil (7) zur Reparatur der landwirtschaftlichen Arbeitsmaschine (1) in die landwirtschaftliche Arbeitsmaschine (1) eingebaut wird, um einen Ausfall der landwirtschaftlichen Arbeitsmaschine (1) und/oder des Bauteils (4) der landwirtschaftlichen Arbeitsmaschine (1) zu beenden und/oder die Dauer des Ausfalls zu verkürzen und/oder den Ausfall zu verhindern.

7. Verfahren nach einem der vorhergehenden Ansprüche, **dadurch gekennzeichnet, dass** in der Analyseroutine die Ausfalldauerwahrscheinlichkeit und/oder die Beschädigungswahrscheinlichkeit der landwirtschaftlichen Arbeitsmaschine (1) und/oder des Bauteils (4) der landwirtschaftlichen Arbeitsmaschine (1) weiterhin auf Basis von aggregierten Betriebsdaten einer Vielzahl anderer landwirtschaftlicher Arbeitsmaschinen (1) und/oder Logistikdaten des mit dem Ersatzteil (7) korrespondieren Bauteils (4) der landwirtschaftlichen Arbeitsmaschine (1) ermittelt wird.

8. Verfahren nach einem der vorhergehenden Ansprüche, **dadurch gekennzeichnet, dass** die Betriebsdaten und/oder die aggregierten Betriebsdaten Auslastungsdaten, insbesondere eine Anzahl an Betriebsstunden und/oder Motorlastdaten, und/oder Konfigurations- und Parametereinstellungsdaten und/oder Konfigurations- und Parametereinstellungsänderungsdaten und/oder Kalibrierungsdaten und/oder Fehlerdaten, insbesondere eine Fehlerart und/oder eine Fehlerhäufigkeit, der landwirtschaftlichen Arbeitsmaschine (1) und/oder eines Bauteils (4) der landwirtschaftlichen Arbeitsmaschine (1) umfassen.

9. Verfahren nach einem der vorhergehenden Ansprüche, **dadurch gekennzeichnet, dass** die landwirtschaftliche Arbeitsmaschine (1) mindestens einen Sensor (9) aufweist und dass die Betriebsdaten während eines Betriebs der landwirtschaftlichen Arbeitsmaschine (1) mittels des mindestens eines Sensors (9) gesammelt werden.

10. Verfahren nach einem der Ansprüche 7 bis 9, **dadurch gekennzeichnet, dass** die aggregierten Betriebsdaten Fehlerfortpflanzungsdaten und/oder Interdependenzdaten zu dem mit dem Ersatzteil (7) korrespondierenden Bauteil (4) und zumindest einem weiteren Bauteil (4) der landwirtschaftlichen Arbeitsmaschine (1) umfassen und vorzugsweise, dass die Ausfalldauerwahrscheinlichkeit und/oder die Beschädigungswahrscheinlichkeit, zumindest auch, dem weiteren Bauteil (4) zugeordnet ist.

11. Verfahren nach einem der Ansprüche 7 bis 10, **dadurch gekennzeichnet, dass** die Logistikdaten eine zu erwartende Lieferdauer des Ersatzteils (7), insbesondere eine Wahrscheinlichkeitsverteilung einer zu erwartenden Lieferdauer-Zeitspanne, und/oder eine Verfügbarkeit des Ersatzteils (7) und/oder einen zu erwartenden Verbrauch des Ersatzteils (7) durch andere landwirtschaftliche Arbeitsmaschinen (1) umfassen.

12. Verfahren nach einem der vorhergehenden Ansprüche, **dadurch gekennzeichnet, dass** in der Analyseroutine die Ausfalldauerwahrscheinlichkeit und/oder die Beschädigungswahrscheinlichkeit der landwirtschaftlichen Arbeitsmaschine (1) und/oder des Bauteils (4) der landwirtschaftlichen Arbeitsmaschine (1) weiterhin auf Basis von der landwirtschaftlichen Arbeitsmaschine (1) zugeordneten Umweltdaten und/oder der Vielzahl von landwirtschaftlichen Arbeitsmaschinen (1) zugeordneten aggregierten Umweltdaten ermittelt wird, vorzugsweise, dass die Umweltdaten und/oder die aggregierten Umweltdaten Wetterdaten und/oder Geodaten und/oder Klimadaten und/oder Erntedaten, insbesondere Ernteperiodendaten, umfassen, weiter vorzugsweise, dass die Umweltdaten Mikro- und/oder Makrodaten umfassen, wobei die Mikrodaten das direkte Umfeld der landwirtschaftlichen Arbeitsmaschine (1), insbesondere ein zu bearbeitendes Feld, betreffen und wobei die Makrodaten, zumindest potentiell, eine Mehrzahl an landwirtschaftlichen Arbeitsmaschinen (1) betreffen.

13. Verfahren nach einem der vorhergehenden Ansprüche, **dadurch gekennzeichnet, dass** in der Analyseroutine die Ausfalldauerwahrscheinlichkeit und/oder die Beschädigungswahrscheinlichkeit der landwirtschaftlichen Arbeitsmaschine (1) und/oder des Bauteils (4) der landwirtschaftlichen Arbeitsmaschine (1) weiterhin auf Basis von der landwirtschaftlichen Arbeitsmaschine (1) zugeordneten Konstruktionsdaten ermittelt wird, vorzugsweise dass die Konstruktionsdaten Identifikationsdaten, insbesondere Baureihendaten und/oder Herstellerdaten, und/oder technische Eigenschaften der landwirtschaftlichen Arbeitsmaschine (1) und/oder eines Bauteils (4) der landwirtschaftlichen Arbeitsmaschine (1), insbesondere des mit dem Ersatzteil (7) korrespondierenden Bauteils (4), umfassen.

14. Verfahren nach einem der vorhergehenden Ansprüche, **dadurch gekennzeichnet, dass** die Betriebsdaten der landwirtschaftlichen Arbeitsmaschine (1) und/oder der Vielzahl der landwirtschaftlichen Arbeitsmaschinen (1) von einem Diagnosegerät (10) gesammelt werden, vorzugsweise, dass das Diagnosegerät (10) heterogene Betriebsdaten, insbesondere von unterschiedlichen Bauteilherstellern und/oder unterschiedlichen Bauteilserien, sammelt.

15. Verfahren nach Anspruch 14, **dadurch gekennzeichnet, dass** das Diagnosegerät (10) an die landwirtschaftliche Arbeitsmaschine (1) anschließbar ist, um eine Diagnose der landwirtschaftlichen Arbeitsmaschine (1) zu erstellen und dass die Betriebsdaten gesammelt werden, während das Diagnosegerät (10) an die landwirtschaftliche Arbeitsmaschine (1) angeschlossen ist, und/oder, dass die Betriebsdaten von dem Diagnosegerät (10) von der landwirtschaftlichen Arbeitsmaschine (1) empfangen werden, wenn das Diagnosegerät (10) an die landwirtschaftliche Arbeitsmaschine (1) angeschlossen ist.

16. Computersystem eingerichtet zur Durchführung des Verfahrens Anspruch 1, wobei das Computersystem (2) eine Web-Applikation aufweist, mittels derer ein Nutzer die Lieferroutine initiieren kann, und/oder, dass das Computersystem (2) dazu eingerichtet ist, die Lieferroutine automatisch zu initiieren.

## Claims

1. A method for servicing and/or repairing an agricultural working machine (1), **characterized in that** in an analysis routine, a breakdown duration probability of and a probability of damage to the agricultural working machine (1) and/or a component (4) of the agricultural working machine (1) is determined on the basis of operational data for the agricultural working machine (1) and wherein, based on the analysis routine, a delivery routine comprising a delivery of a replacement part (7) corresponding to a component (4) of the agricultural working machine (1) to a service point (8) associated with the agricultural working machine (1) is initiated in order to reduce the breakdown duration probability and the probability of damage.

2. The method according to claim 1, **characterized in that** the initiation of the delivery routine comprises ordering the replacement part (7) for delivery to the service point (8), preferably **in that** the delivery routine is executed, more preferably **in that** the service point (8) is in physical proximity to the agricultural working machine (1).

3. The method according to claim 1 or claim 2, **characterized in that** the probability of damage is a probability distribution for possible damage to the agricultural working machine (1) and/or a component (4) of the agricultural working machine (1) due to a malfunction and/or reduced function of the component (4) of the agricultural working machine (1) which corresponds to the replacement part (7).

4. The method according to one of the preceding claims, **characterized in that** in order to service the agricultural working machine (1), the replacement part (7) is installed in the agricultural working machine (1) in order to reduce the probability of damage.

5. The method according to one of the preceding claims, **characterized in that** the breakdown duration probability is a probability distribution for the duration of a possible breakdown of the agricultural working machine (1) and/or a component (4) of the agricultural working machine (1) due to a breakdown of the component (4) which corresponds to the replacement part (7).

6. The method according to one of the preceding claims, **characterized in that** in order to repair the agricultural working machine (1), the replacement part (7) is installed in the agricultural working machine (1) in order to bring to an end a breakdown of the agricultural working machine (1) or of the component (4) of the agricultural working machine (1) or to shorten the duration of the breakdown and/or to prevent the breakdown.

7. The method according to one of the preceding claims, **characterized in that** in the analysis routine, the breakdown duration probability of and/or the probability of damage to the agricultural working machine (1) or the component (4) of the agricultural working machine (1) is further determined on the basis of aggregated operational data for a plurality of other agricultural working machines (1) and/or logistical data for the component (4) of the agricultural working machine (1) which corresponds to the replacement part (7).

8. The method according to one of the preceding claims, **characterized in that** the operational data and/or the aggregated operational data comprise utilization data, in particular a number of operating hours and/or engine load data and/or configuration setting data and parameter setting data and/or configuration setting modification data and parameter setting modification data and/or calibration data and/or error data, in particular an error type and/or an error frequency, of the agricultural working machine (1) and/or a component (4) of the agricultural working machine (1).

9. The method according to one of the preceding claims, **characterized in that** the agricultural working machine (1) has at least one sensor (9) and **in that** the operational data are collected during an operation of the agricultural working machine (1) by means of the at least one sensor (9).

10. The method according to one of claims 7 to 9, **characterized in that** the aggregated operational data comprise error propagation data and/or interdependence data concerning the component (4) which corresponds to the replacement part (7) and at least one further component (4) of the agricultural working machine (1), and preferably **in that** the breakdown duration probability of and/or the probability of damage are at least also associated with the further component (4).

11. The method according to one of claims 7 to 10, **characterized in that** the logistical data comprise an expected delivery time for the replacement part (7), in particular a probability distribution for an expected delivery time period, and/or an availability of the replacement part (7) and/or an expected consumption of the replacement part (7) by other agricultural working machines (1).

12. The method according to one of the preceding claims, **characterized in that** in the analysis routine, the breakdown duration probability of and/or the probability of damage to the agricultural working machine (1) and/or the component (4) of the agricultural working machine (1) is further determined on the basis of environmental data associated with the agricultural working machine (1) and/or aggregated environmental data associated with the plurality of agricultural working machines (1), preferably **in that** the environmental data and/or the aggregated environmental data comprise weather data and/or geographical data and/or climate data and/or harvest data, in particular harvesting period data, more preferably **in that** the environmental data comprise micro-data and/or macro-data, wherein the micro-data concern the immediate environment of the agricultural working machine (1), in particular a field to be cultivated, and wherein the macro-data at least potentially concern a plurality of agricultural working machines (1).

13. The method according to one of the preceding claims, **characterized in that** in the analysis routine, the breakdown duration probability of and/or the probability of damage to the agricultural working machine (1) and/or the component (4) of the agricultural working machine (1) are further determined on the basis of constructional data associated with the agricultural working machine (1), preferably **in that** the constructional data comprise identification data, in particular production series data and/or manufacturer's data, and/or technical characteristics of the agricultural working machine (1) and/or a component (4) of the agricultural working machine (1), in particular the component (4) corresponding to the replacement part (7).

14. The method according to one of the preceding claims, **characterized in that** the operational data for the agricultural working machine (1) and/or the plurality of agricultural working machines (1) are collected by a diagnostic device (10), preferably **in that** the diagnostic device (10) collects heterogeneous operational data, in particular from different component manufacturers and/or different component series.

15. The method according to claim 14, **characterized in that** the diagnostic device (10) can be connected to the agricultural working machine (1) in order to carry out a diagnostic of the agricultural working machine (1), and **in that** the operational data are collected while the diagnostic device (10) is connected to the agricultural working machine (1), and/or **in that** the operational data are received from the agricultural working machine (1) by the diagnostic device (10) when the diagnostic device (10) is connected to the agricultural working machine (1).

16. A computer system configured to carry out the method according to claim 1, wherein the computer system (2) has a web application by means of which a user can initiate the delivery routine, and/or in that the computer system (2) is configured to initiate the delivery routine automatically.

## Revendications

1. Procédé d'entretien et/ou de réparation d'une machine de travail agricole (1), **caractérisé en ce que**, dans un programme d'analyse, sur la base de données de fonctionnement de la machine de travail agricole (1), une probabilité de durée de panne et une probabilité de détérioration de la machine de travail agricole (1) et/ou d'un composant (4) de la machine de travail agricole (1) est déterminée et, sur la base du programme d'analyse, pour réduire la probabilité de durée de panne et la probabilité de détérioration est lancé un programme de livraison incluant une livraison, à un point de service (8) associé à la machine de travail agricole (1), d'une pièce de rechange (7) correspondant au composant (4) de la machine de travail agricole (1).

2. Procédé selon la revendication 1, **caractérisé en ce que** le lancement du programme de livraison inclut une commande du composant (7) en vue d'une livraison au point de service (8), préférentiellement **en ce que** le programme de livraison est exécuté, plus préférentiellement **en ce que** le point de service (8) se trouve à proximité géographique de la machine de travail agricole (1).

3. Procédé selon la revendication 1 ou 2, **caractérisé en ce que** la probabilité de détérioration est une répartition des probabilités relative à une possible détérioration de la machine de travail agricole (1) et/ou d'un composant (4) de la machine de travail agricole (1) en raison d'un dysfonctionnement et/ou d'un fonctionnement dégradé du composant (4) de la machine de travail agricole (1) correspondant à la pièce de rechange (7).

4. Procédé selon une des revendications précédentes, **caractérisé en ce que** la pièce de rechange (7) pour l'entretien de la machine de travail agricole (1) est montée sur la machine de travail agricole (1) afin de réduire la probabilité de détérioration.

5. Procédé selon une des revendications précédentes, **caractérisé en ce que** la probabilité de durée de panne est une répartition des probabilités relative à la durée d'une possible panne de la machine de travail agricole (1) et/ou d'un composant (4) de la machine de travail agricole (1) en raison d'une panne du composant (4) correspondant à la pièce de rechange (7).

6. Procédé selon une des revendications précédentes, **caractérisé en ce que** la pièce de rechange (7) pour la réparation de la machine de travail agricole (1) est montée sur la machine de travail agricole (1) afin de mettre fin à une panne de la machine de travail agricole (1) et/ou du composant (4) de la machine de travail agricole (1) et/ou de réduire la durée de la panne et/ou d'empêcher la panne.

7. Procédé selon une des revendications précédentes, **caractérisé en ce que**, dans le programme d'analyse, la probabilité de durée de panne et/ou la probabilité de détérioration de la machine de travail agricole (1) et/ou du composant (4) de la machine de travail agricole (1) est en outre déterminée sur la base de données de fonctionnement agrégées d'une pluralité d'autres machines de travail agricoles (1) et/ou de données logistiques du composant (4) de la machine de travail agricole (1) correspondant à la pièce de rechange (7).

8. Procédé selon une des revendications précédentes, **caractérisé en ce que** les données de fonctionnement et/ou les données de fonctionnement agrégées incluent des données de charge, en particulier un nombre d'heures de fonctionnement et/ou de données de charge au moteur, et/ou des données de réglage de configurations ou de paramètres et/ou des données de modification de réglage de configurations et de paramètres et/ou des données de calibrage et/ou des données de défauts de la machine de travail agricole (1) et/ou d'un composant (4) de la machine de travail agricole (1).

9. Procédé selon une des revendications précédentes, **caractérisé en ce que** la machine de travail agricole (1) comprend au moins un capteur (9), et **en ce que** les données de fonctionnement sont recueillies au moyen du au moins un capteur (9) pendant un fonctionnement de la machine de travail agricole (1).

10. Procédé selon une des revendications 7 à 9, **caractérisé en ce que** les données de fonctionnement agrégées incluent des données de propagation de défauts et/ou des données d'interdépendance relatives au composant (4) correspondant à la pièce de rechange (7) et au moins à un autre composant (4) de la machine de travail agricole (1) et, préférentiellement, **en ce que** la probabilité de durée de panne et/ou la probabilité de détérioration est associée au moins aussi à l'autre composant (4).

11. Procédé selon une des revendications 7 à 10, **caractérisé en ce que** les données logistiques incluent une durée de livraison escomptée de la pièce de rechange (7), en particulier une répartition des probabilités d'un créneau de durée de livraison escompté, et/ou une disponibilité de la pièce de rechange (7) et/ou une utilisation escomptée de la pièce de rechange (7) par d'autres machines de travail agricoles (1).

12. Procédé selon une des revendications précédentes, **caractérisé en ce que**, dans le programme d'analyse, la probabilité de durée de panne et/ou la probabilité de détérioration de la machine de travail agricole (1) et/ou du composant (4) de la machine de travail agricole (1) est en outre déterminée sur la base de données environnementales associées à la machine de travail agricole (1) et/ou de la pluralité de données environnementales agrégées associées à des machines de travail agricoles (1), préférentiellement **en ce que** les données environnementales et/ou les données environnementales agrégées incluent des données météorologiques et/ou des données géographiques et/ou des données climatiques et/ou des données de récolte, en particulier des données de périodes de récolte, plus préférentiellement **en ce que** les données environnementales incluent des microdonnées et/ou des macrodonnées, les microdonnées concernant l'environnement immédiat de la machine de travail agricole (1), en particulier un champ à travailler, et les macrodonnées concernant au moins potentiellement une pluralité de machines de travail agricoles (1).

13. Procédé selon une des revendications précédentes, **caractérisé en ce que**, dans le programme d'analyse, la probabilité de durée de panne et/ou la probabilité de détérioration de la machine de travail agricole (1) et/ou du composant (4) de la machine de travail agricole (1) est déterminée en outre sur la base de données de construction associées à la machine de travail agricole (1), préférentiellement **en ce que** les données de construction incluent des données d'identification, en particulier des données de série de fabrication et/ou des données de fabricant, et des caractéristiques techniques de la machine de travail agricole (1) et/ou d'un composant (4) de la machine de travail agricole (1), en particulier du composant (4) correspondant à la pièce de rechange (7).

14. Procédé selon une des revendications précédentes, **caractérisé en ce que** les données de fonctionnement de la machine de travail agricole (1) et/ou de la pluralité des machines de travail agricoles (1) sont recueillies par un appareil de diagnostic (10), préférentiellement **en ce que** l'appareil de diagnostic (10) recueille des données de fonctionnement hétérogènes, en particulier de divers fabricants de composants et/ou de diverses séries de composants.

15. Procédé selon la revendication 14, **caractérisé en ce que** l'appareil de diagnostic (10) est connectable à la machine de travail agricole (1) afin d'établir un diagnostic de la machine de travail agricole (1) et **en ce que** les données de fonctionnement sont recueillies pendant que l'appareil de diagnostic (10) est connecté à la machine de travail agricole (1), et/ou **en ce que** les données de fonctionnement sont reçues de l'appareil de diagnostic (10) par la machine de travail agricole (1) lorsque l'appareil de diagnostic (10) est connecté à la machine de travail agricole (1).

16. Système informatique agencé pour mettre en œuvre le procédé selon la revendication 1, le système informatique (2) comportant une application web au moyen de laquelle un utilisateur peut lancer le programme de livraison, et/ou en ce que le système informatique (2) est agencé pour lancer le programme de livraison automatiquement.
